# EUROPEAN PATENT APPLICATION

(11) **EP 0 887 488 A2**
(43) Date of publication of application: **30.12.1998**
(21) Application number: 98305005.5
(22) Date of filing: 25.06.1998
(51) Int. Cl.: E04F 19/04, A47B 95/00, F16B 21/09

(54) **Wall mounting of elongate elements**

(30) Priority: 27.06.1997 GB 9713747
(71) Applicant: RICHARD BURBIDGE LIMITED, Oswestry Shropshire SY11 1HZ (GB)
(72) Inventor: Jones, Anthony Trevor, Oswestry, Shropshire SY11 1HZ (GB); McCallum, Thomas Alexander, Oswestry, Shropshire SY11 1HZ (GB); Smith, Raymond Douglas, Oswestry, Shropshire SY11 1HZ (GB); Zeller, John Mark, Rothwell, Kettering Northants NN 14 6HY (GB)
(74) Representative: Shaw, Laurence

(57) **Abstract**

A kit of parts for holding a moulding to a wall, the moulding having a wedge-shaped channel (16) in its rear wall, comprises a set of clips (12) and fasteners (14). The fasteners are screwed into the wall and have heads (30) with necks (32). Each clip (12) is wedge-shaped and has a hole (26) shaped to receive the head of the fastener and lock it there. The clip (12) is rotated through 90° to lock it in the channel (16).

## Description

This invention relates to attachment means whereby an elongate element e.g. an architectural moulding, skirting board or the like, may be releasably attached to a wall or other surface.

Architectural mouldings usually take the form of elongate elements of decorative wooden mouldings. There has been a number of prior proposals for releasably attaching such elements to a surface, particularly a wall, whereby the attachment means are not visible. One such means is described in our European patent 0328804B.

It is one object of the present invention to provide an improved means whereby an element e.g. a length of architectural moulding, may be attached to a wall, which means are invisible when the element is attached to the wall and which allow the element to be removed from and re-attached to the wall as desired. It is also an object of the present invention to provide an improved attachment means that can conveniently and readily be attached to the length of moulding and which can provide an adjustment in the height of the moulding relative to the wall to which it is to be attached.

Accordingly in one aspect the invention provides a kit of parts comprising the element, at least one clip and one fastener, the element having a front surface and a rear surface, the rear surface having a longitudinally-extending re-entrant channel, the or each clip having a length to fit into the channel so as to extend across the channel and to be retained therein by the re-entrant portions thereof, the or each clip having a surface to be located adjacent a wall or like support, the surface containing a keyhole aperture having a head portion and a tail portion, each fastener comprising a head portion and a shank, the head portion of the aperture being dimensioned to receive the head of the fastener and the tail portion being adapted to receive the shank portion.

Preferably the tail portion comprises a plurality of longitudinally spaced apart individual shank receiving portions defined by shoulders extending across the tail portion, the shoulders being resiliently flexible whereby the shank may be passed from one shank receiving portion to another.

In another aspect the invention provides an assembly comprising an elongate element attached to a wall, the element having a front surface and a rear surface, the rear surface having a longitudinally extending re-entrant channel, at least one clip received in the channel and retained therein by the re-entrant options thereof, the clip having a surface in contact with the wall, the surface having a key hole aperture having a head portion and a tail portion, a fastener having a shank portion received in the wall and a head portion received in the tail portion of the key hole aperture.

In yet another aspect the invention provides a method of mounting an elongate element on the surface of a wall, the element having a front surface and a rear surface, the rear surface having at least one longitudinally extending re-entrant channel, the method comprising locating at least one clip in the channel and retaining the clip therein by engagement of the clip and the re-entrant portions of the channel; the clip having a key hole aperture in the surface thereof to face the wall, the key hole having a head portion and a tail portion, the method further comprising mounting the shank portion of a fastener having a head portion in the wall and then offering up the elongate element to the fastener to engage the head of the fastener until the fastener is received in the head portion of the key hole slot.

In yet another aspect the invention provides a clip comprising a generally wedge shaped body having a surface to be located adjacent a wall or like support, the surface containing an aperture shaped like a key hole, the aperture having a head portion and a tail portion which comprises a plurality of longitudinally spaced apart portions separated by shoulders extending across the tail portion, each potion being dimensioned to receive the shank of a fastener

Where the element is to be attached to a wall or other support, e.g. a wall of a domestic house or communal building a series of spaced fasteners e.g. fixing screws, is fixed to the wall in a conventional manner, e.g. by use of wall plugs. One clip per fastener is fitted in the channel in the rear face of the strip with the keyhole disposed vertically, the spacing of the clips corresponding to the spacing of the fasteners. With the element horizontal, the tail portion of the keyhole in each clip will then extend vertically. The element can then releasably be attached to the wall by passing the head of each fastener into the head portion of its corresponding clip and then moving the element until the shaft of each fastener is forced into an appropriate shaft receiving recess portion of the respective clip where the element will be firmly held.

The arrangement allows some adjustment of the height of the element along its length relative to the wall because the shaft of a fastener for one clip may be positioned in a different socket receiving recess to that of another clip.

In one particularly preferred embodiment, where the clip has a width narrower than its length whereby it may readily be slid into the channel, the kit of parts also includes a key, the key having a head portion and a tail portion, the tail portion being of shape and size to be a corresponding fit in the tail portion of the keyhole of the clip. By this means the clip may be positioned to lie longitudinally in the channel in the rear face of the element and then turned through 90° to bring the clip to lie across the channel and be trapped therein by the re-entrant portions of the channel.

In another aspect the invention provides a kit of parts comprising a key as defined and a plurality of the clips of the invention. The kit preferably also includes an elongate attachment member, e.g. a fixing screw, for each clip.

Embodiments of the invention will be described by way of example only with reference to the accompanying diagrammatic drawings in which:-
Figure 1 is an exploded perspective view of a kit of parts according to the invention;
Figure 2 is a perspective view from one end showing a clip being positioned in the longitudinal channel of a moulding;
Figure 3 shows the clip of Figure 1 located in a desired position in the channel;
Figure 4 is a view similar to Figure 1 showing another kit of parts according to the invention;
Figure 5 is a transverse section showing the clip and strip of Figure 4 located together, and
Figure 5A is an elevation of the clip of Figures 4 and 5.

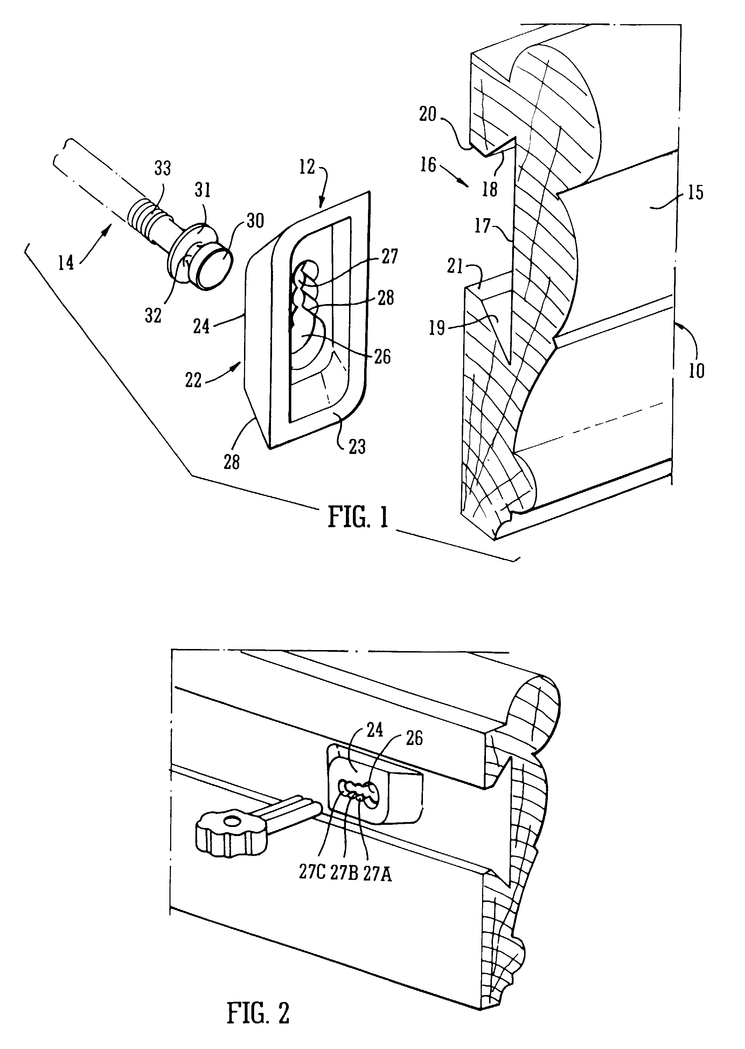

In Figure 1 is shown a portion of an elongate wooden architectural moulding element or strip 10, one clip 12 and one fastener 14. Strip 10 has a decorative front surface 15 and a longitudinally extending generally dovetail shaped channel 16 in its rear face. Channel 16 has a base 17 and sidewalls 18, 19 which lie on convergent planes leading from base 17 to a pair of opposed flat faces 20, 21 extending across the entrance to the channel. The channel 16 thus has a re-entrant shape. Each clip 12 is a generally wedge shaped body 22 having an open base wall 23 and a solid top wall 24 in which is formed a keyhole shaped aperture 25 having a head portion 26 and a tail portion 27. The length of the moulding 23 is substantially the width of the base 17 of the channel 16, but the width of the body 22 is smaller, as can be seen in Figure 2. The shorter side walls 28 of the moulding 22 slope at angles corresponding to those of the channel side walls 18, 19.

The head portion 26 of the keyhole aperture 25 is of size to receive the head 30 of fastener 14. The head 30 is joined to a collar 31 by a neck or shaft portion 32. Beyond collar 31 is the shank 33 which is screw-threaded for connection to a wall or other surface.

The head portion 26 of the keyhole aperture opens into tail portion 27 which consists of three connected recesses 27A, 27B, 27C of generally curvilinear outline. Recess 27A is separated from head portion 26 by opposed resiliently flexible shoulders 28. Recesses 27A and 27B and 27C are also defined by pairs of such shoulders. The recesses are too small to accommodate head 30 of the fastener 14 but can accommodate its neck 32. The gap between each pair of opposed shoulders is smaller than the diameter of neck 32. Hence to accommodate the neck in any recess, it must be first forced past the pair of respective shoulders after head 30 has been passed through head portion 26 of the keyhole. If it is desired to move the fastener further along the keyhole, then neck 26 must be forced past successive pairs of shoulders into the desired recess. Collar 31 is too large to pass through the head portion 26 of the keyhole, thereby limiting the penetrating fastener 14 into the clip.

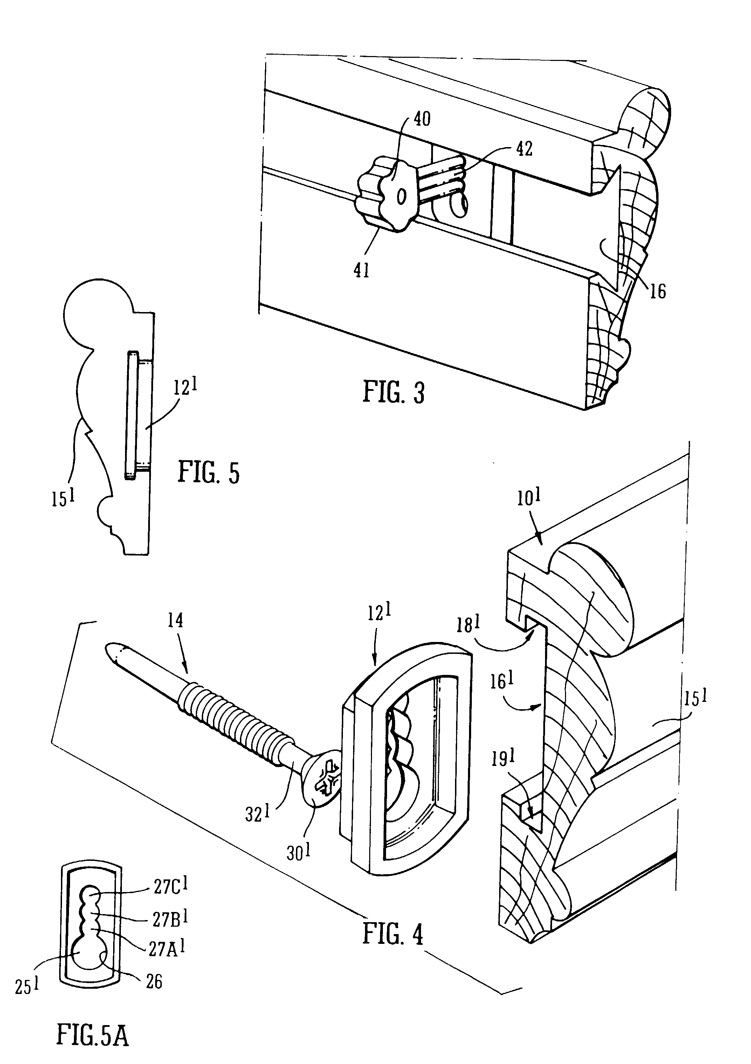

Figures 2 and 3 show the positioning of clip 12 in the channel 16 of element 10. Clip 12 is first positioned to lie longitudinally as shown in the channel 16 generally in the major axis of the channel. A key 40 having a head portion 41 and a key profile 42 corresponding to the tail portion 27 of the clip is inserted to bring its key portion into the tail portion 27. The key, and hence the clip 12, is then turned through 90° to extend transversely across channel 16 until the sloping sidewalls 28 engage behind sidewalls 18, 19 of channel 16, thereby wedgingly locking the clip into the channel with the keyhole disposed with the tail portion 27 uppermost. The key 40 is then removed. The fasteners 14 are screwed into the wall, until the shoulder 31 is in contact with the wall, thereby regulating the distance between the head 30 and the wall. A plurality of clips is locked into the channel spaced at intervals corresponding to a plurality of fasteners 14 attached to a wall (not shown) to which the element 10 is to be attached. The element is then offered up to the wall, and the clips forced on to the fasteners, the element being pushed down where necessary to force one clip down the ladder of recesses as required for alignment. When this happens the moulding is in contact with the wall whereas the clip is within the channel, allowing the moulding to be compressed against the wall. The element is removed from the wall by the reverse steps.

A second embodiment of the invention is shown in Figures 4 to 5A, where prime numbers are used to indicate parts corresponding to those in Figures 1 to 3. Moulding 10' has a decorative front surface 15¹ and a rear longitudinally extending channel 16'. Channel 16' has a flat base surface 17¹ and extending normal thereto surfaces 18' and 19' leading to faces 20¹ and 21¹ opposed across the entrance 22¹ to channel 16¹ via shoulder surfaces 28¹. Fastener 14¹ has a head portion 30¹ and neck portion 32¹ configured to fit into the keyhole aperture 25' in the same manner as for fastener 14 and clip 12. Clips 12¹ are fitted into channel 16¹ using a key (not shown) in a similar fashion to the embodiment of Figure 1.

The clip is simple to make in quantity and to fit into the moulding. The channel is easy to machine in the moulding, with little wastage of material. The clips are placed in the channel where required; it is not necessary to slide clips along the moulding channel. The moulding can be removed for decorating and replaced with ease. Moulding lengths may be joined together. Spacers may be present.

## Claims

1. A kit of parts comprising a decorative moulding element, at least one clip and one fastener, the element having a front surface and a rear surface, the rear surface having a longitudinally-extending re-entrant channel, each clip having a length to fit into the channel so as to extend across the channel and to be retained therein by the re-entrant portions thereof, each clip having a surface to be located adjacent a wall or like support, the face containing a key hole aperture having a head portion and a tail portion, each fastener comprising a head portion and a shank, the head portion of the aperture being dimensioned to receive the head of the fastener and the tail portion being adapted to receive the shank portion.

2. A kit according to Claim 1, wherein the tail portion comprises a plurality of longitudinally spaced apart individual shank receiving portions defined by shoulders extending across the tail portion, the shoulders being resiliently flexible whereby the shank may be passed from one shank receiving portion to another.

3. A kit according to Claim 1 or 2, wherein the clip has a width narrower than its length whereby it may readily be slid into the channel.

4. A kit according to Claim 3, including a key, the key having a head portion and a tail portion, the tail portion being of shape and size to be a corresponding fit in the tail portion of the keyhole of the clip and by which the clip may be moved to be engaged in the channel.

5. An assembly comprising an elongate element attached to a wall, the element having a front surface and a rear surface, the rear surface having a longitudinally extending re-entrant channel, at least one clip received in the channel and retained therein by the re-entrant portions thereof, the clip having a surface in contact with the wall, the surface having a key hole aperture having a head portion and a tail portion; a fastener having a shank portion received in the wall and a head portion received in the tail portion of the key hole aperture.

6. An assembly according to Claim 5, wherein the tail portion comprises a plurality of longitudinally spaced apart individual shank receiving portions defined by shoulders extending across the tail portion, the shoulders being resiliently flexible whereby the shank may be passed from one shank portion to another.

7. A method of mounting an elongate element on the surface of a wall, the element having a front surface and a rear surface, the rear surface having at least one longitudinally extending re-entrant channel, the method comprising locating at least one clip in the channel and retaining the clip therein by engagement of the clip and the re-entrant portions of the channel; the clip having a key hole aperture in the surface thereof to face the wall, the key hole having a head portion and a tail portion; the method further comprising mounting the shank portion of a fastener having a head portion in the wall and then offering up the elongate element to the fastener to engage the head of the fastener until the fastener is received in the head portion of the key hole slot.

8. A clip comprising a generally wedge shaped body having a surface to be located adjacent a wall or like support, the surface containing an aperture shaped like a key hole, the aperture having a head portion and a tail portion which comprises a plurality of longitudinally spaced apart portions separated by shoulders extending across the tail portion, each portion being dimensioned to receive the shank of a fastener.
